# EUROPEAN PATENT SPECIFICATION

(11) **EP 4 436 742 B1**
(45) Date of publication and mention of the grant of the patent: **01.10.2025**
(21) Application number: 22814062.0
(22) Date of filing: 09.11.2022
(51) Int. Cl.: B23D 49/16, B23D 51/20

(54) **HAND-HELD POWER SAW**
HANDGEFÜHRTE MOTORSÄGE
MACHINE À SCIER PORTATIVE

(30) Priority: 23.11.2021 EP 21209990
(43) Date of publication of application: 02.10.2024
(73) Proprietor: Hilti Aktiengesellschaft, 9494 Schaan (LI)
(72) Inventor: HAAS, Günter, 86916 Kaufering (DE)
(74) Representative: Hilti Aktiengesellschaft Corporate Intellectual Property
(86) International application number: PCT/EP2022/081245
(87) International publication number: WO 2023/094153

(56) References cited:
- WO-A1-96/05031

## Description

The invention relates to a hand-held power saw having a drive device, having a transmission device which has a housing device, and having a pendulum lifting rod which can be operatively connected to a tool and which is mounted in a bearing device, according to the type defined in the preamble of appended patent claim 1.

Reciprocating saws in which a pendulum lifting rod is arranged in a bearing device and can be displaced in a translational manner in relation to the bearing device are known from practice. In this case, the bearing device is mounted so as to be pivotable in relation to a transmission housing at an articulation point. In a region spaced apart therefrom, the bearing device can be driven by a drive device, with the result that, during operation of the reciprocating saw, the bearing device is pivoted about the articulation point in relation to the transmission housing. In addition, the drive device is used to move the pendulum lifting rod in a longitudinal direction of the pendulum lifting rod in relation to the bearing device.

A hand-held power saw as per the preamble of appended claim 1 is known from WO96/05031 A1.

Such an embodiment has the disadvantage that, during operation of the power saw, saw teeth of a saw blade which is operatively connected to the pendulum lifting rod perform different movements that deviate from one another. This may have the effect that, during operation of the reciprocating saw, the saw blade lifts off from a workpiece to be machined and a sawing performance is thereby reduced to an undesirable extent.

It is therefore an object of the present invention to provide a hand-held power saw whose sawing performance is increased.

A hand-held power saw having a drive device, having a transmission device which has a housing device, and having a pendulum lifting rod which can be operatively connected to a tool, configured in particular as a saw blade, and which is mounted in a bearing device is thus proposed, wherein the drive device is configured to displace the pendulum lifting rod in relation to the bearing device substantially in a linear movement, and wherein the drive device cooperates, in a first connecting region, with the bearing device so as to move the first connecting region of the bearing device in relation to the housing device.

Provision is made according to the invention for the drive device to cooperate, in a second connecting region, with the bearing device so as to move the second connecting region of the bearing device in relation to the housing device in a movement which has at least one translational movement component.

By means of a power saw configured according to the invention, which may be configured, for example, as a reciprocating power saw or power jigsaw, it is possible to achieve an advantageously good sawing performance in a simple manner. This is because a movement of the bearing device in relation to the housing device is possible in a particularly flexible manner and therefore a movement of the pendulum lifting rod in relation to the housing device can be adjusted to the desired extent during operation, and it is for example possible to prevent a saw blade connected to the pendulum lifting rod, or regions of the saw blade, from lifting off from a workpiece to be machined. This is achieved in that, in the second connecting region, the bearing device can be displaced in relation to the housing device in a movement which has at least one translational movement component, and this makes it possible to achieve a highly customizable movement of the bearing device in relation to the housing device.

In the case of the power saw configured according to the invention, the bearing device has no direct articulation point in relation to the housing device, wherein a movement of the bearing device in relation to the housing device represents a pure pivoting movement without a translational movement component.

A movement of the bearing device in relation to the housing device is possible in a particularly simple and force-optimized manner if the first connecting region and the second connecting region of the bearing device are arranged spaced apart from one another in the longitudinal direction of the power saw. In principle, it is possible for the connecting regions to be arranged in the region of the bearing device freely as desired.

In an advantageous embodiment of a hand-held power saw according to the invention, the movement of the bearing device in the first connecting region and in the second connecting region may be matched to one another in such a way that, during operation of the power saw, the pendulum lifting rod performs, preferably in all regions, an in particular identical movement, in particular a circular or elliptical movement, in relation to the housing device in the longitudinal direction of the pendulum lifting rod. In this way, during operation of the power saw, saw teeth of a saw blade connected to the pendulum lifting rod preferably also perform a substantially comparable, preferably virtually identical movement, such that lifting-off of saw teeth from a workpiece to be machined is prevented, and a good sawing performance is achieved, in a simple and reliable manner during operation of the power saw.

If the movements of the bearing device in the first connecting region and in the second connecting region are matched to one another in such a way that the bearing device is displaced substantially perpendicularly with respect to a movement direction of the pendulum lifting rod, a good sawing performance of the power saw is achieved in a simple manner since lifting-off of a saw blade connected to the pendulum lifting rod during the machining of a workpiece is reliably prevented in this way.

In a constructionally simple embodiment of a hand-held power saw according to the invention, a lever device which is mounted so as to be pivotable in relation to the housing device is provided, said lever device being able to be actuated by the drive device and being connected to the second connecting region of the bearing device by way of a first articulation point. In this way, there is no direct connection of the bearing device to the housing device, with the result that the bearing device can be displaced in a very flexible manner in relation to the housing device by way of a corresponding configuration of the lever device.

In order to achieve a desired displacement of the bearing device in the second connecting region in relation to the housing device in a simple manner, the lever device may be mounted so as to be pivotable in relation to the housing device at a second articulation point.

In order to be able to achieve a desired activation of the bearing device in a flexible manner during operation of the hand-held power saw, the drive device may cooperate with the first connecting region of the bearing device by way of a control cam and/or with the second connecting region of the bearing device by way of a further control cam. In this case, the respective control cam is in particular part of a component which is driven about a rotational axis, the control being achieved by way of varying radial distances of the control cam above the periphery of the component.

In an advantageous embodiment of a hand-held power saw according to the invention, the drive device may be operatively connected to the pendulum lifting rod by way of a bevel gear, a rotational movement of the bevel gear being transformed into a translational movement of the pendulum lifting rod.

In a simple constructional embodiment of the invention, a pin-shaped element is arranged eccentrically on the bevel gear, said pin-shaped element being in engagement with an oblong hole connected to the pendulum lifting rod, such that a rotational movement of the bevel gear is in this way transformed into a translational movement of the pendulum lifting rod.

In a constructionally simple embodiment of the invention, the control cam and/or the further control cam may be configured in a rotationally fixed manner with the bevel gear. The bevel gear may, for example, have two disc-shaped regions which control the respective connecting region of the bearing device by way of a radial extent that varies in terms of extent. In this case, it is for example possible for the regions to be arranged on the same side of the bevel gear or on different sides of the bevel gear.

Simple cooperation of the bearing device with the control cam in the first connecting region is achieved if the bearing device is in engagement with the control cam by way of a control element arranged in the first connecting region of the bearing device, said control element in particular rolling on the control cam, sliding over the control cam or being guided in a guideway of the control cam.

Equally, simple cooperation of the bearing device with the further control cam in the second connecting region may be achieved if the lever device is in engagement in engagement with the further control cam by way of a further control element. The further control element may in particular roll on the further control cam, slide over the control cam or be guided in a guideway of the further control cam.

In an alternative embodiment of the invention, provision may also be made for the further control element to be arranged in the second connecting region of the bearing device and to be driven by way of the further control cam.

In a cost-effective embodiment of a hand-held power saw according to the invention, a single drive, configured in particular as an electric motor, of the drive device is provided, said single drive being able to be used to actuate the pendulum lifting rod in the first connecting region and/or in the second connecting region of the bearing device. As an alternative thereto, provision may also be made for a plurality of drives of the drive device to be provided, which are provided for driving the pendulum lifting rod and the bearing device in the respective connecting region.

Further advantages will become apparent from the following description of the figures.

An exemplary embodiment of the present invention is depicted in the figures. The figures, the description and the claims contain numerous features in combination. A person skilled in the art will expediently also consider the features individually and combine them to form useful further combinations within the scope of the appended claims.

In the drawing:
- Figure 1: shows a highly schematic illustration of an operating principle of a reciprocating power saw known from the prior art; and;
- Figure 2: shows a highly simplified illustration of an operating principle of a reciprocating power saw according to the invention.

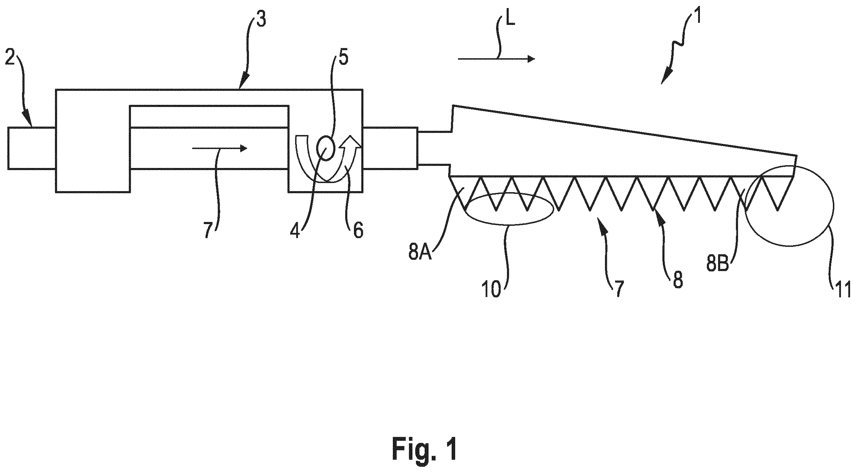

Figure 1 shows a diagrammatic sketch of a detail of a known reciprocating saw 1. A pendulum lifting rod 2 is visible here which is mounted in a bearing device 3 so as to be displaceable in the longitudinal direction 7 thereof. In the present case, the bearing device 3 has, in a front region in the longitudinal direction L of the reciprocating saw 1, a pivot joint 4 via which the bearing device 3 is mounted so as to be rotatable in the direction of the arrow 6 in relation to a transmission housing 5. A drive which is not visible in any more detail and which can be used to pivot the bearing device 3 about the pivot joint 4 engages in a known manner in a rear region, in the longitudinal direction L of the reciprocating saw 1, of the bearing device 3, wherein the drive is in particular also provided for displacing the pendulum lifting rod 2 in relation to the bearing device 3 in the longitudinal direction L of the pendulum lifting rod 2.

The pendulum lifting rod 2 is connected, in a front region in the longitudinal direction L of the reciprocating saw 1, to a saw blade 7 which has a multiplicity of teeth 8. Visible by way of example in figure 1 are a movement 10, resulting during operation of the reciprocating saw 1, of a tip of a first saw tooth 8A which is arranged in a rear region, in the longitudinal direction L of the reciprocating saw 1, of the saw blade 7 and a movement 11, resulting during operation of the reciprocating saw 1, of a tip of a second saw tooth 8B which is arranged in a front region, in the longitudinal direction L of the reciprocating saw 1, of the saw blade 7.

As can be gathered from Figure 1, a mutually deviating, different movement 10, 11 of various saw teeth 8 is produced during operation of the reciprocating saw 1 in the case of such a construction. This may have the effect that, during operation of the reciprocating saw 1, the saw blade 7 lifts off from a workpiece and a sawing performance of the reciprocating saw 1 is reduced to an undesirable extent.

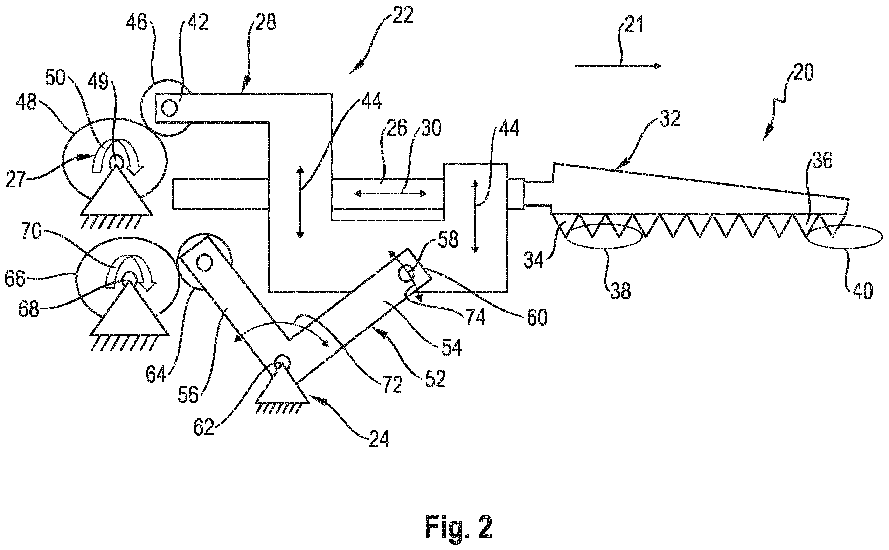

A subregion of a power saw configured according to the invention, which is configured as a reciprocating saw 20 or reciprocating power saw, is shown in a highly schematic form in figure 2. In an alternative embodiment of the invention, the power saw may, for example, also be configured as a power jigsaw.

The reciprocating saw 20 has a transmission device 22 having a housing device 24, of which various attachment points are visible in figure 2.

In a known manner, the transmission device 22 has a pendulum lifting rod 26 which is mounted in a bearing device 28 and which can be displaced in a translational manner in relation to the bearing device 28 in the longitudinal direction 30 of the pendulum lifting rod 26 by means of a drive device 27 which is apparent only by way of drive movements that are produced.

In a first connecting region 42, the bearing device 28 can be displaced in particular in a known manner in relation to the housing device 22, in this case in a direction 44 arranged perpendicularly with respect to the longitudinal direction 30 of the pendulum lifting rod 26, by the drive device configured for example as an electric motor 27. Such an actuation of the bearing device 28 is possible in various ways. By way of example, in the first connecting region 42, the bearing device 28 may have a control element 46 which cooperates with a control cam 48. In a peripheral direction, the control cam 48 has varying distances from a pivot point 49, such that when the control element 46 is rolling on the control cam 48, or when the control element 46 is sliding over the control cam 48, during a rotation of the control cam 48 according to the arrow 50 about the pivot point 49, the first connecting region 42 of the bearing device 28 is displaced substantially perpendicularly with respect to the longitudinal direction 30.

A lever device 52 is also apparent in figure 2, said lever device in this case being of L-shaped configuration with a first limb 54 and a second limb 56 connected to the first limb 54. In principle, the lever device may have any desired configuration. In this case, the first limb 54 of the lever device 52 is pivotably connected to a second connecting region 60 of the bearing device 28 at a first articulation point 58, wherein, in the present case, the second connecting region 60 is arranged upstream of the first connecting region 42 of the bearing device 28 so as to be spaced apart with respect to a longitudinal direction 21 of the reciprocating saw 20.

The lever device 52 is mounted so as to be pivotable in relation to the housing device 24 at a second articulation point 62. In the present case, in an end region averted from the second articulation point 62, the second limb 56 has a further control element 64 which is configured to cooperate with a further control cam 66. The further control cam 66 is mounted so as to be rotatable about a pivot point 68 which is connected to the housing device 24, the further control cam 66 being able to be driven in the direction of the arrow 70 about the pivot point 68 by the drive device 27. The further control cam 66 has, in turn, a distance from the pivot point 68 that varies in the peripheral direction, such that, during a rotation of the further control cam 66 about the pivot point 68, the further control element 64 pivots the lever device 52 according to the arrow 72 about the second articulation point 62 and this results in a displacement of the first articulation point 58 in the direction of the arrow 74. In this case, the movement of the first articulation point 58 has a translational movement component in relation to the housing device 24 and can be designed in a flexible manner in dependence on the embodiment of the lever device 52.

The cooperation of the control element 46 with the control cam 48 and of the further control element 64 with the further control cam 66 and the embodiment of the lever device 52 are in this case matched to one another in such a way that, during operation of the power saw, the bearing device 26 is displaced substantially perpendicularly with respect to the longitudinal direction 30.

Preferably, a single drive device 27 configured for example as an electric motor is provided, said single drive device being able to be used to drive both the pendulum lifting rod 26 in the longitudinal direction 30 and the control cam 48 and the further control cam 66. Provision may in this case be made for the drive device 27 to drive a bevel gear in a known manner, wherein a pin-shaped element which is arranged eccentrically with respect to a pivot point of the bevel gear and which is in engagement with an oblong hole connected to the pendulum lifting rod 26 is arranged on the bevel gear. A rotation of the bevel gear leads, due to the cooperation of the pin-shaped element with the oblong hole, to the translational movement of the pendulum lifting rod 26 in relation to the bearing device 28. Preferably, the control cams 48, 66 are connected to the bevel gear in a rotationally fixed manner, such that the control cam 48 and the further control cam 66 can be driven together with the bevel gear by the drive device 27 in a simple manner. The control cams 48, 66 may be configured in one part with the bevel gear.

In the present case, the pendulum lifting rod 26 is connected, in a front region in the longitudinal direction L of the reciprocating saw 20, in a known manner to a tool configured as a saw blade 32. The saw blade 32 has a plurality of saw teeth 34, 36, wherein, in the present case, a movement path 38 of a tip of a first saw tooth 34 and a movement path 40 of a second saw tooth 36 during operation of the power saw 20 are each shown, which each result from a combined movement of the bearing device 28 in relation to the housing device 24 and of the pendulum lifting rod 26 in relation to the bearing device 28.

The first saw tooth 34 is arranged in a rear region in the longitudinal direction L of the reciprocating saw 20, and the second saw tooth 36 is arranged in a front region in the longitudinal direction L of the reciprocating saw 20. As is apparent in Figure 2, the proposed solution can be used to achieve a situation in which the movement paths 38, 40 of all saw teeth 34, 36 during operation of the reciprocating saw 20 are substantially identical. This reliably prevents the saw blade 32 from lifting off from a workpiece during a sawing operation, such that the power saw 20 has a good sawing performance.

## Claims

1. Hand-held power saw (20) having a drive device (27), having a transmission device (22) which has a housing device (24), and having a pendulum lifting rod (26) which can be operatively connected to a tool, configured in particular as a saw blade (32), and which is mounted in a bearing device (28), wherein the drive device (27) is configured to displace the pendulum lifting rod (26) in relation to the bearing device (28) substantially in a linear movement (30), and wherein the drive device (27) cooperates, in a first connecting region (42), with the bearing device (28) so as to move the first connecting region (42) of the bearing device (28) in relation to the housing device (24), **characterized in that** the drive device (27) cooperates, in a second connecting region (60), with the bearing device (28) so as to move the second connecting region (60) of the bearing device (28) in relation to the housing device (24) in a movement which has at least one translational movement component.

2. Hand-held power saw according to claim 1, **characterized in that** the movement of the bearing device (28) in the first connecting region (42) and in the second connecting region (60) are matched to one another in such a way that, during operation of the power saw (20), the pendulum lifting rod (26) performs, preferably in all regions, an in particular identical movement in a longitudinal direction (30) of the pendulum lifting rod (26).

3. Hand-held power saw according to either of claims 1 and 2, **characterized in that** the movement of the bearing device (28) in the first connecting region (42) and in the second connecting region (60) are matched to one another in such a way that, during operation of the power saw (20), the bearing device (28) is displaced substantially perpendicularly with respect to a movement direction (30) of the pendulum lifting rod (26).

4. Hand-held power saw according to one of claims 1 to 3, **characterized in that** a lever device (52) which is mounted so as to be pivotable in relation to the housing device (24) is provided, said lever device being able to be actuated by the drive device (27) and being connected to the bearing device (28) in the second connecting region (60) by way of a first articulation point (58).

5. Hand-held power saw according to claim 4, **characterized in that** the lever device (52) is mounted so as to be pivotable in relation to the housing device (24) at a second articulation point (62).

6. Hand-held power saw according to one of the preceding claims, **characterized in that** the drive device (27) cooperates with the first connecting region (42) of the bearing device (28) by way of a control cam (48).

7. Hand-held power saw according to one of the preceding claims, **characterized in that** the drive device (27) cooperates with the second connecting region (60) of the bearing device (28) by way of a further control cam (66).

8. Hand-held power saw according to one of the preceding claims, **characterized in that** the drive device (27) is operatively connected to the pendulum lifting rod (26) by way of a bevel gear.

9. Hand-held power saw according to claim 8, **characterized in that** a pin-shaped element is arranged eccentrically on the bevel gear, said pin-shaped element being in engagement with an oblong hole connected to the pendulum lifting rod (26).

10. Hand-held power saw according to one of claims 6 to 9, **characterized in that** the control cam (48) and/or the further control cam (66) are configured in a rotationally fixed manner with the bevel gear.

11. Hand-held power saw according to one of claims 6 to 10, **characterized in that** the bearing device (28) is in engagement with the control cam (48) by way of a control element (46) arranged in the first connecting region (42) of the bearing device (28).

12. Hand-held power saw according to one of claims 7 to 11, **characterized in that** the lever device (52) is in engagement with the further control cam (66) by way of a further control element (64).

13. Hand-held power saw according to one of the preceding claims, **characterized in that** a single drive of the drive device is provided, said single drive being able to be used to displace the pendulum lifting rod (26) in the first connecting region (42) and/or in the second connecting region (60) of the bearing device (28).

## Patentansprüche

1. Handkreissäge (20) mit einer Antriebseinrichtung (27), mit einer Übertragungseinrichtung (22), die eine Gehäuseeinrichtung (24) aufweist, und mit einer Pendelhubstange (26), die mit einem insbesondere als Sägeblatt (32) ausgebildeten Werkzeug in Wirkverbindung bringbar ist und die in einer Lagereinrichtung (28) gelagert ist, wobei die Antriebseinrichtung (27) dazu ausgebildet ist, die Pendelhubstange (26) in Bezug auf die Lagereinrichtung (28) im Wesentlichen in einer Linearbewegung (30) zu verschieben, und wobei die Antriebseinrichtung (27) in einem ersten Verbindungsbereich (42) mit der Lagereinrichtung (28) zusammenwirkt, um den ersten Verbindungsbereich (42) der Lagereinrichtung (28) in Bezug auf die Gehäuseeinrichtung (24) zu bewegen, **dadurch gekennzeichnet, dass** die Antriebseinrichtung (27) in einem zweiten Verbindungsbereich (60) mit der Lagereinrichtung (28) zusammenwirkt, um den zweiten Verbindungsbereich (60) der Lagereinrichtung (28) in Bezug auf die Gehäuseeinrichtung (24) in einer Bewegung zu bewegen, die mindestens eine translatorische Bewegungskomponente aufweist.

2. Handkreissäge nach Anspruch 1, **dadurch gekennzeichnet, dass** die Bewegung der Lagereinrichtung (28) im ersten Verbindungsbereich (42) und im zweiten Verbindungsbereich (60) derart aufeinander abgestimmt sind, dass die Pendelhubstange (26) im Betrieb der Kreissäge (20) vorzugsweise in allen Bereichen eine insbesondere identische Bewegung in einer Längsrichtung (30) der Pendelhubstange (26) ausführt.

3. Handkreissäge nach einem der Ansprüche 1 oder 2, **dadurch gekennzeichnet, dass** die Bewegung der Lagereinrichtung (28) im ersten Verbindungsbereich (42) und im zweiten Verbindungsbereich (60) derart aufeinander abgestimmt sind, dass im Betrieb der Kreissäge (20) die Lagereinrichtung (28) im Wesentlichen senkrecht zu einer Bewegungsrichtung (30) der Pendelhubstange (26) verschoben wird.

4. Handkreissäge nach einem der Ansprüche 1 bis 3, **dadurch gekennzeichnet, dass** eine gegenüber der Gehäuseeinrichtung (24) schwenkbar gelagerte Hebeleinrichtung (52) vorgesehen ist, die von der Antriebseinrichtung (27) betätigbar ist und im zweiten Verbindungsbereich (60) über einen ersten Anlenkpunkt (58) mit der Lagereinrichtung (28) verbunden ist.

5. Handkreissäge nach Anspruch 4, **dadurch gekennzeichnet, dass** die Hebeleinrichtung (52) an einem zweiten Anlenkpunkt (62) gegenüber der Gehäuseeinrichtung (24) schwenkbar gelagert ist.

6. Handkreissäge nach einem der vorhergehenden Ansprüche, **dadurch gekennzeichnet, dass** die Antriebseinrichtung (27) über eine Steuerkurve (48) mit dem ersten Verbindungsbereich (42) der Lagereinrichtung (28) zusammenwirkt.

7. Handkreissäge nach einem der vorhergehenden Ansprüche, **dadurch gekennzeichnet, dass** die Antriebseinrichtung (27) über eine weitere Steuerkurve (66) mit dem zweiten Verbindungsbereich (60) der Lagereinrichtung (28) zusammenwirkt.

8. Handkreissäge nach einem der vorhergehenden Ansprüche, **dadurch gekennzeichnet, dass** die Antriebseinrichtung (27) über ein Kegelrad mit der Pendelhubstange (26) in Wirkverbindung steht.

9. Handkreissäge nach Anspruch 8, **dadurch gekennzeichnet, dass** exzentrisch am Kegelrad ein stiftförmiges Element angeordnet ist, das mit einem mit der Pendelhubstange (26) verbundenen Langloch in Eingriff steht.

10. Handkreissäge nach einem der Ansprüche 6 bis 9, **dadurch gekennzeichnet, dass** die Steuerkurve (48) und/oder die weitere Steuerkurve (66) drehfest mit dem Kegelrad ausgebildet sind.

11. Handkreissäge nach einem der Ansprüche 6 bis 10, **dadurch gekennzeichnet, dass** die Lagereinrichtung (28) über ein im ersten Verbindungsbereich (42) der Lagereinrichtung (28) angeordnetes Steuerelement (46) mit der Steuerkurve (48) in Eingriff steht.

12. Handkreissäge nach einem der Ansprüche 7 bis 11, **dadurch gekennzeichnet, dass** die Hebeleinrichtung (52) über ein weiteres Steuerelement (64) mit der weiteren Steuerkurve (66) in Eingriff steht.

13. Handkreissäge nach einem der vorhergehenden Ansprüche, **dadurch gekennzeichnet, dass** ein einziger Antrieb der Antriebseinrichtung vorgesehen ist, mit dem die Pendelhubstange (26) im ersten Verbindungsbereich (42) und/oder im zweiten Verbindungsbereich (60) der Lagereinrichtung (28) verschiebbar ist.

## Revendications

1. Scie mécanique à main (20) comportant un dispositif d'entraînement (27), comportant un dispositif de transmission (22) qui comporte un dispositif de logement (24), et comportant une tige de levage pendulaire (26) qui peut être fonctionnellement reliée à un outil, conçu en particulier comme une lame de scie (32) et qui est monté dans un dispositif de palier (28), le dispositif d'entraînement (27) étant conçu pour déplacer la tige de levage pendulaire (26) par rapport au dispositif de palier (28) sensiblement dans un mouvement linéaire (30), et le dispositif d'entraînement (27) coopérant, dans une première région de liaison (42), avec le dispositif de palier (28) de manière à déplacer la première région de liaison (42) du dispositif de palier (28) par rapport au dispositif de logement (24), **caractérisée en ce que** le dispositif d'entraînement (27) coopère, dans une deuxième région de liaison (60), avec le dispositif de palier (28) de manière à déplacer la deuxième région de liaison (60) du dispositif de palier (28) par rapport au dispositif de logement (24) dans un mouvement qui comporte au moins une composante de mouvement de translation.

2. Scie mécanique à main selon la revendication 1, **caractérisée en ce que** les mouvements du dispositif de palier (28) dans la première région de liaison (42) et dans la deuxième région de liaison (60) sont adaptés l'un à l'autre de telle sorte que, lors du fonctionnement de la scie mécanique (20), la tige de levage pendulaire (26) effectue, de préférence dans toutes les régions, un mouvement en particulier identique dans une direction longitudinale (30) de la tige de levage pendulaire (26).

3. Scie mécanique à main selon l'une ou l'autre des revendications 1 et 2, **caractérisée en ce que** les mouvements du dispositif de palier (28) dans la première région de liaison (42) et dans la deuxième région de liaison (60) sont adaptés l'un à l'autre de telle sorte que, lors du fonctionnement de la scie mécanique (20), le dispositif de palier (28) est déplacé sensiblement perpendiculairement à une direction de mouvement (30) de la tige de levage pendulaire (26).

4. Scie mécanique à main selon une des revendications 1 à 3, **caractérisée en ce qu'**il est prévu un dispositif de levier (52) qui est monté de manière à pouvoir pivoter par rapport au dispositif de logement (24), ledit dispositif de levier pouvant être actionné par le dispositif d'entraînement (27) et étant relié au dispositif de palier (28) dans la deuxième région de liaison (60) par le biais d'un premier point d'articulation (58).

5. Scie mécanique à main selon la revendication 4, **caractérisée en ce que** le dispositif de levier (52) est monté de manière à pouvoir pivoter par rapport au dispositif de logement (24) au niveau d'un deuxième point d'articulation (62).

6. Scie mécanique à main selon une des revendications précédentes, **caractérisée en ce que** le dispositif d'entraînement (27) coopère avec la première région de liaison (42) du dispositif de palier (28) par le biais d'une came de commande (48).

7. Scie mécanique à main selon une des revendications précédentes, **caractérisée en ce que** le dispositif d'entraînement (27) coopère avec la deuxième région de liaison (60) du dispositif de palier (28) par le biais d'une autre came de commande (66).

8. Scie mécanique à main selon une des revendications précédentes, **caractérisée en ce que** le dispositif d'entraînement (27) est fonctionnellement relié à la tige de levage pendulaire (26) par le biais d'une roue conique.

9. Scie mécanique à main selon la revendication 8, **caractérisée en ce qu'**un élément en forme de broche est disposé de façon excentrique sur la roue conique, ledit élément en forme de broche étant en prise avec un trou oblong relié à la tige de levage pendulaire (26).

10. Scie mécanique à main selon une des revendications 6 à 9, **caractérisée en ce que** la came de commande (48) et/ou l'autre came de commande (66) sont conçues d'une manière fixe en rotation avec la roue conique.

11. Scie mécanique à main selon une des revendications 6 à 10, **caractérisée en ce que** le dispositif de palier (28) est en prise avec la came de commande (48) par le biais d'un élément de commande (46) disposé dans la première région de liaison (42) du dispositif de palier (28).

12. Scie mécanique à main selon une des revendications 7 à 11, **caractérisée en ce que** le dispositif de levier (52) est en prise avec l'autre came de commande (66) par le biais d'un autre élément de commande (64).

13. Scie mécanique à main selon une des revendications précédentes, **caractérisée en ce qu'**il est prévu un unique organe d'entraînement du dispositif d'entraînement, ledit unique organe d'entraînement pouvant être utilisé pour déplacer la tige de levage pendulaire (26) dans la première région de liaison (42) et/ou dans la deuxième région de liaison (60) du dispositif de palier (28).
